# EUROPÄISCHE PATENTANMELDUNG

(11) **EP 2 998 367 A1**
(43) Veröffentlichungstag der Anmeldung: **23.03.2016**
(21) Anmeldenummer: 14185667.4
(22) Anmeldetag: 19.09.2014
(51) Int. Cl.: C09D 1/02, C04B 26/04, C04B 26/32, C04B 28/24, C04B 28/26

(54) **Silikatische Putzbeschichtungsmasse, Leichtputz gebildet aus der silikatischen Putzbeschichtungsmasse und Verwendung der silikatischen Putzbeschichtungsmasse zur Herstellung von Leichtputzen**

(71) Anmelder: DAW SE, 64372 Ober-Ramstadt (DE)
(72) Erfinder: BEFURT, Uwe, 64372 Ober-Ramstadt (DE); LAUTENSCHLÄGER, Oliver, 64354 Reinheim (DE); STARK, Heiko, 99837 Berka (DE); WINTER, Enrico, 36266 Heringen (DE); BROX, Matthias, 36199 Rotenburg (DE)
(74) Vertreter: Metten, Karl-Heinz

(57) **Zusammenfassung**

Die Erfindung betrifft eine silikatische Putzbeschichtungsmasse und die Verwendung besagter Putzbeschichtungsmasse zur Herstellung von Leichtputzen. Die silikatische Putzbeschichtungsmasse, umfasst mindestens einen silikatischen und/oder calcitischen Füllstoff, mindestens einen Leichtfüllstoff, Kieselsol, mindestens ein Wasserglas, Körnungsmaterial, mindestens ein organisches Bindemittel, Additive und Wasser. Sie zeichnet sich durch ein niedrige Dichte und eine leichtgängige Verarbeitbarkeit aus. Die Erfindung betrifft ferner einen silikatischen Leichtputz.

## Beschreibung

Die Erfindung betrifft eine silikatische Putzbeschichtungsmasse und die Verwendung besagter Putzbeschichtungsmasse zur Herstellung von Leichtputzen.

Als Putz bezeichnet man eine Beschichtung, die auf Wände oder Decken aufgebracht wird und dort ausgetrocknet bzw. abgebunden vorliegt. Dies erzeugt eine ansprechende und zumeist ebene glatte oder strukturierte Oberfläche. Putzbeschichtungsmassen werden zu Herstellung solcher Putze verwendet. Die Beschichtung kommt häufig bei Fassaden und betonders häufig an WDVS-Untergründen zum Einsatz.

Silikatische Putzbeschichtungsmassen stellen im Allgemeinen mineralische Putzbeschichtungen dar. Der Vorteil silikatischer Beschichtungen ist die geringe Toxizität. Außerdem bestehen sie zu einem großen Anteil aus umweltverträglichem Siliziumdioxid.

Silikatische Beschichtungen sind dem Fachmann bekannt. Die WO 95/29139 A1 beschreibt beispielsweise eine Silikatmasse mit einer amorphen Bindemasse aus Metalloxiden. Siliziumdioxid soll im Überschuss zu einem Alkalioxid vorliegen. Die Sitikatmasse ist beständig gegen Laugen, Säuren, Bewuchs und Witterungseinflüsse.

Die DE 37 13 495 A1 beschreibt, eine Grundierung für Anstrichfarben auf Wasserglasbasis. Ein amorpher synthetischer Füllstoff auf Silikatbasis wird ebenfalls in der Zusammensetzung verwendet. Das resultierende Anstrichsystem soll einen wirksamen Schutz gegen Kohlendioxid bieten und ist wasserdampfundurchlässig. Außerdem soll es witterungsbeständig sein.

Die DE 10 2005 040 091. A1 beschreibt einen Leichtputz in pastöser Form, der keine Vermischung mit Wasser an der Baustelle erfordert und somit sofort einsatzbereit ist. Die Zusammensetzung umfasst in einer Ausführungsform Titandioxid, einen Leichtfüllstoff, ein organisches Bindemittel und ein Alkalihydroxid.

Die DE 199 25 412 A1 beschreibt unter anderem silikatgebundene Beschichtungsmaterialien, welche wasserlösliche Silikate, Kieselsäuren oder organische Stickstoffverbindungen als Stabilisatoren enthalten. Hierdurch soll ein lagerbeständiges Beschichtungsmaterial mit einer hohen Bindekraft erhalten werden.

In der DE 100 01 831 A1 werden eine silikatische Beschichtungsmasse sowie ein damit beschichtetes Substrat beschrieben. Die Beschichtungsmasse umfasst Wasserglas, ein Alkalioxid und Kieselsol und soll eine erhöhte Lagerstabilität und Witterungsbeständigkeit auf weisen.

In der DE 10 2006 051 216 A1 werden leichte Gesteinskörnungen mit Schüttdichten ≤ 1.2 kg/l insbesondere auch für Putze beschrieben. Vorliegend wird dies erreicht, indem Zement und ein industrielles Nebenprodukt vermengt und mit Wasser versetzt werden. Durch Granulieren soll die gewünschte Gesteinskörnung erhalten werden.

Die DE 10 2006 046 860 A1 beschreibt eine Zusammensetzung enthaltend Siliziumdioxid, Füllstoffe, Pigmente und Polymerdispersionen. Die zugehörigen Putze und Farben sollen eine hohe Abriebbeständigkeit, gute Haftung, gute Witterungsstabilität und eine hohe Wasserdampfdurchlässigkeit zeigen. Die Oberfläche soll sich von herkömmlichen Oberflächen durch ihre Nanostruktur unterscheiden.

Ein Nachteil vieler herkömmlicher Putzbeschichtungsmassen ist, dass Ausblühungen auftreten können. Ausblühungen kommen durch das Anreichern verfärbender Stoffe auf der Bauwerksoberfläche zustande. In den Untergrund eindringendes Wasser löst Salze heraus, beispielsweise Kalium- und Natriumsulfat, welche auf der Außenfassade beim Verdampfen des Wassers auskristallisieren oder dort z.B. mit dem Kohlendioxid aus der Luft zu schwerlöslichen Karbonaten reagieren. Ein weiteres Problem ergibt sich durch einen möglichen Algenund Pilzbefall. Idealerweise sollte eine Putzbeschichtung witterungsbeständig sein. Gleichzeitig ergeben sich gewisse Anforderungen bezüglich der Brennbarkeit, welche möglichst niedrig sein sollte, und der Haftung zum Untergrund, welche hinreichend hoch sein sollte. Die Herausforderung besteht darin, den vorstehenden Anforderungen in ihrer Gesamtheit gerecht zu werden. Herkömmliche silikatische Putze weisen zudem oftmals hohe Dichten im Bereich von 1,9 g/cm³ auf. Dies ist mit einem hohen Verbrauch beim Aufbringen verbunden und erschwert die Verarbeitung und den Transport. Der Facharbeiter muss die Beschichtung oftmals unter schwierigen Bedingungen auf eine hohe Gerüstlage tragen und dann an einer vertikalen Arbeitsfläche aufbringen, so dass ein hohes Eigengewicht der Putzbeschichtung besonders nachteilig ist.

Die der vorliegenden Erfindung zugrunde liegende Aufgabe bestand darin, eine Putzbeschichtungsmasse und einen Putz bereitzustellen, die gute Eigenschaften bezüglich der vorstehend genannten Anforderungen zeigen und gleichzeitig den Verbrauch an Putzbeschichtungsmasse bezogen auf die zu beschichtende Fläche reduzieren.

Ferner bestand die Aufgabe darin, eine Putzbeschichtungsmasse bereitzustellen, die sich besser als herkömmliche Putze verarbeiten lässt und die Putze mit sehr guter Farbtonstabilität liefert.

Die Aufgabe wird gelöst durch eine silikatische Putzbeschichtungsmasse, umfassend
a) mindestens einen silikatischen Füllstoff und/oder mindestens einen calcitischen Füllstoff, insbesondere mindestens einen silikatischen Füllstoff und keinen calcitischen Füllstoff,
b) mindestens einen Leichtfüllstoff,
c) Kieselsol,
d) mindestens ein Wasserglas,
e) Körnungsmaterial,
f) mindestens ein organisches Bindemittel,
g) Additive und
h) Wasser,
wobei die Putzbeschichtungsmasse über einen pH-Wert von mindestens 9,5, insbesondere mindestens 10,5 verfügt.

Ferner wird die Aufgabe gelöst durch einen Leichtputz, der die vorstehend genannte silikatische Putzbeschichtungsmasse umfasst und vorzugsweise aus dieser gebildet wird. Eine silikatische Putzbeschichtungsmasse im Sinne der vorliegenden Erfindung stellt regelmäßig eine verarbeitungsfähige pastöse Masse dar, die nach Auftragung auf eine Unterlage, beispielsweise einen Wandkörper, eine aufgetrocknete Beschichtung in Form eines Leiclitputzes liefert. Die erfindungsgemäße Putzbeschichtungsmasse stellt im Sinne der vorliegenden Erfindung eine silikatische Putzbeschichtungsmasse dar, als hierfür silikatische Bindemittel (Komponenten c) und d)) zum Einsatz kommen.

Die hohen pH-Werte der erfindungsgemäßen silikatischen Putzbeschichtungsmasse wirken sich wachstumshemmend auf Bakterien und Pilze bei Lagerung der silikatischen Putzbeschichtungsmasse in Vorratsbehältern und Gebinden und auf einen Bewuchs des Putzes durch z.B. Pilze oder Algen aus. Es hat sich gezeigt, dass diese hohen pH-Werte auch in den aus der obigen silikatischen Putzbeschichtungsmasse hergestellten Leichtputzen lange erhalten bleiben. Die erfindungsgemäße Beschichtungsmasse kann demgemäß auch ohne herkömmliche Konservierungsmittel verwendet werden. Besonders vorteilhaft liegt der pH-Wert der erfindungsgemäßen. Beschichtungsmasse bei 11 oder darüber.

Es hat sich ferner überraschenderweise geneigt, dass die spezielle Kombination von Kieselsol, Wasserglas und dem organischen Bindemittel in besonderer Weise geeignet ist, eine Mischung aus Leichtfüllstoffen, silikatischen Füllstoffen und/oder calcitischen Füllstoffen, insbesondere silikatischen Füllstoffen und keine calcitischen Füllstoffe, und Kömungsmaterial zu binden, so dass die erfindungsgemäße silikatische Putzbeschichtungsmasse mit ihren vorteilhaften Eigenschaften erhalten werden kann. Ganz besonders gute Resultate insbesondere auch hinsichtlich einer sehr geringen Anschmutzneigung und einer sehr ausgeprägten Farbtonstabilität und Farbbrillanz stellen sich mit solchen erfindungsgemäßen silikatischen Putzbeschichtungsmassen ein, die neben den silikatischen Füllstoffen eine signifikant geringere Menge an calcitischen Füllstoffen, beispielsweise weniger als die Hälfte der Gewichtsmenge an silikatischen Füllstoffen, besonders bevorzugt keine calcitischen Füllstoffe enthalten. Die aus den erfindungsgemäßen silikatischen Putzbeslhichtungsmassen resultierenden Putzbeschichtungsmassen haften sowohl auf mineralischen als auch auf dispersionsgebundenen Untergründen sehr gut. Putze aus diesen Beschichtungsmassen zeigen regelmäßig auch bei ungünstigen Witterungsverhältnissen keine Ausblühungen. Die erfindungsgemäßen Putzbeschichtungsmassen sind sehr ergiebig und ohne zusätzliche Topf- und/oder Filmkonservierung bewuchshemmend gegenüber z.B. Algen und Pilzen. Die erfindungsgemäßen Putzbeschichtungsmassen können in sehr geringer Dichte erhalten werden und erlauben eine leichtgängige Verarbeitung. Außerdem weisen die erfindungsgemäßen Putzbeschichtungsmassen einen verbesserten Feuchtigkeitshaushalt bei geringer Wasseraufnahme in Verbindung mit einer guten Wasserdampfdurchlässigkeit auf.

Außerdem kann die erfindungsgemäße Putzbeschichtungsmasse in einer zweckmäßigen Ausgestaltung umfassen:
i) mindestens ein Hydrophobierungsmittel und/oder
j) Fasern, vorzugsweise Glas- und/oder Cellulosefasern, und/oder
k) mindestens einen Farbstoff und/oder mindestens ein Pigment, vorzugsweise ein Weißpigment.

Im Sinne der vorliegenden Erfindung weist ein Füllstoff im Gegensatz zu einem Leichtfüllstoff eine Dichte größer oder gleich 1 kg/l auf. Der vorstehend genannte silikatische Füllstoff hat vorzugsweise eine Dichte größer oder gleich 2,0 kg/l, bevorzugt größer oder gleich 2,2 kg/l und besonders bevorzugt größer oder gleich 2,4 kg/l.

Der genannte silikatische Füllstoff verfügt vorzugsweise über eine durchschnittliche Partikelgröße D₅₀ von nicht mehr als 250 µm, insbesondere liegt die durchschnittliche Partikelgröße im Bereich von 20 µm bis 200 µm. Geeignete silikatische Füllstoffe können z.B. ausgewählt werden aus der Gruppe bestehend aus Quarziten, Schichtsilikaten, Talk, Glimmer, Kaolin, Feldspate, Vutkaniten und Kieselerden wie Kieselgur und Diatomeenerden oder beliebigen Mischungen hiervon.

Der mindestens eine calcitische Füllstoff hat vorzugsweise ebenfalls eine Dichte größer oder gleich 2,0 kg/l, bevorzugt größer oder gleich 2,2 kg/l und besonders bevorzugt größer oder gleich 2,4 kg/l. Der mindestens eine calcitische Füllstoff verfügt vorzugsweise über eine durchschnittliche Partikelgröße D₅₀ im Bereich von 10 bis 100 µm, insbesondere im Bereich von 20 µm bis 50 µm. Für geeignete calcitische Füllstoffe kann z.B. zurückgegriffen werden auf Calciumcarbonate, Dolomite, Calcite, Aragonite oder beliebige Mischungen hiervon.

Ein Leichtfüllstoff im Sinne der vorliegenden Erfindung weist eine Dichte kleiner 1,0 kg/l auf. Vorzugsweise weist der hier verwendete mindestens eine Leichtfüllstoff eine Dichte kleiner oder gleich 0,8 kg/l auf. Insbesondere bevorzugt sind Leichtfüllstoffe mit einer Dichte kleiner oder gleich 0,6 kg/l und ganz besonders bevorzugt kleiner oder gleich 0,5 kg/l. Geeignete Leichtfüllstoffe können dabei z.B. über eine Schüttdichte kleiner oder gleich 0,75 kg/l, bevorzugt kleiner oder gleich 0,5 kg/l und besonders bevorzugt kleiner oder gleich 0,4 kg/l verfügen, während besonders zweckmäßige Füllstoffe Schüttdichten größer oder gleich 1,0 kg/l, bevorzugt größer oder gleich 1,2 kg/l und besonders bevorzugt größer oder gleich 1,4 kg/l aufweisen können. Die Schüttdichte entspricht im Wesentlichen dem Quotienten aus Masse und Volumen des betreffenden tatsächlichen Füllstoffs, wobei das Volumen auch die Zwischenräume zwischen jeweils benachbarten Füllstoffpartikeln und mögliche Hohlräume des Füllstoffs umfasst. Die Bestimmung der Schüttdichte erfolgt im Fall der vorliegenden Erfindung nach ISO 697. Die Schüttdichte von Füllstoffen ist im Regelfall kleiner als die tatsächliche Dichte wie vorangehend zur Unterscheidung von Füllstoffen und Leichtfüllstoffen herangezogen, die ohne Berücksichtigung des Volumens von Zwischen- und Hohlräumen ermittelt wird.

Der mindestens eine Leichtfüllstoff verfügt in einer Ausführungsform über eine durchschnittliche Partikelgröße D₅₀ von nicht mehr als 250 µm, insbesondere liegt die durchschnittliche Partikelgröße D₅₀ im Bereich von 20 µm bis 200 µm. Die Verwendung von Leichtfüllstoffen reduziert die Dichte der Putzbeschichtungsmasse, so dass die benötigte Gewichtsmenge an Putzbeschichtungsmasse für eine vorgegebene Fläche bei gleicher Schichtdicke entsprechend reduziert wird.

Geeignete Leichtfültstoffe umfassen Bims, expandierten Perlit, Blähglas, Hohlglaskugeln und Calciumsilikat-Hydraten, Partikeln aus expandiertem Polystyrolschaum (EPS) oder deren beliebigen Mischungen. In einer zweckmäßigen Ausführungsform stellen Leichtfüllstoffe silikatische Leichtfüllstoffe dar. Insbesondere Leichtfüllstoffe umfassend oder bestehend aus expandiertem Perlit sind bevorzugt.

Geeignete Fasern umfassen organisches und/oder oder anorganisches Fasermaterial. Als anorganische Fasern kommen zum Beispiel Glasfasern und/oder Mineralfasern, beispielsweise Basaltfasern, in Frage, als organische Fasern zum Beispiel Polyolefinfasern wie Polypropylenfasern, Polyamidfasern, Carbonfasern, Cellulosefasern und/oder Acrylfasern. Geeignete Fasern liegen zweckmäßigerweise als sogenannten Schnittfasern vor.

Geeignete Hydrophobierungsmittel umfassen zum Beispiel Wachspräparationen. Hierbei kann es sich im Sinne der Erfindung um Polyethylen-, insbesondere HD-Polyethylen-, Paraffin-, Montan-, Carnauba- oder Amidwachse, Hydrophobierungsmittel auf Basis von Fettsäuren, z.B. Oleaten und/oder Stearaten (z.B. Al-, Zn-, Li- oder Ca-Stearate), oder deren beliebige Mischungen handeln. Ferner unterfallen auch siliziumorganische Verbindungen wie Silikonöle und -wachse unter geeignete Hydrophobierungsmittel.

Additive umfassen vorzugsweise Verdicker, Stabilisatoren, Netz- und Dispergiermittel, Filmbildner, Entschäumer oder deren beliebige Mischungen. Vorzugsweise sind Stabilisatoren enthalten. Insbesondere bevorzugt werden auch Verdicker und/oder Entschäumer verwendet. Vorzugsweise werden Additive ausgewählt aus einer Gruppe bestehend aus Verdickern, Stabilisatoren, Netz- und Dispergiermitteln, Filmbildnern und Entschäumern.

In einer zweckmäßigen Ausgestaltung umfassen Netz- und Dispergiermittel Polyacrylate bzw. Salze der Polyacrylsäure, Phosphatester und Tetraalkylammoniumphosphat oder deren Mischungen. Ferner können als geeignete Netz- und Dispergiermittel auch Aminverbindungen wie Butylamin, Dibutylamin, Triethylamin, N-Oleyl-1,3-propandiamin, Dimethylaminoethanol, Diethylaminoethanol, Aminomethylpropanol, 2-Dibutylaminoethanol oder deren beliebige Mischungen eingesetzt werden. Als Entschäumer kann z.B. auf Mineralöle, Silo- xane und/oder Kieselsäure zurückgegriffen werden.

Geeignete Verdicker umfassen z.B. Polysaccharide, bevorzugt Celluloseäther, Acrylatverdicker, Polyurethanverdicker, natürliche oder synthetische anorganische Verdicker, insbesondere Hektorite, Bentonite und/oder Smektite, modifizierte Stärke, Xanthan, Guar oder beliebige Mischungen hiervon. Hydroxyethylcellulose stellt beispielsweise ein besonders geeignetes Verdickungsmittel dar.

Als Stabilisatoren kommen quartäre Ammoniumverbindungen (QAV), z.B. in Form wässriger Lösungen in Betracht. Darüber hinaus kann auch auf Organosilikonate, z.B. Kalium- und/oder Natriummethylsilikonat, und/oder Tetraalkyl-alkylendiamin zurückgegriffen werden. Geeignete Filmbildner sind dem Fachmann bekannt.

Die Korngröße des Körnungsmaterials beträgt in einer bevorzugten Ausführungsform mindestens 300 µm, insbesondere im Bereich von 320 µm bis 6 mm und besonders bevorzugt im Bereich von 350 µm bis 4 mm. Die in der vorliegenden Druckschrift genannten Korngrößen werden mittels Siebanalyse gemäß DIN 66165 bestimmt. Körnungsmaterial, einschließlich Leichtkörnungsmaterial, im Sinne der vorliegenden Druckschrift hat im Gegensatz zu Füllstoffen und Leichtfüllstoffen eine Korngröße, größer 275 µm; Füllstoffe und Leichtfüllstoffe haben Korngrößen kleiner oder gleich 275 µm.

In einer bevorzugten Ausführungsform umfasst das Körnungsmaterial eine Körnung mit eine Dichte kleiner 1 kg/l, vorzugsweise kleiner oder gleich 0,8 kg/l und insbesondere bevorzugt kleiner oder gleich 0,7 kg/l. Dieses Körnungsmaterial wird im Sinne der vorliegenden Erfindung auch Leichtkörnung genannt. In einer weiteren Ausführungsform liegt die Korngröße des Körnungsmaterials im Bereich von 600 µm bis 3 mm und besonders bevorzugt im Bereich von 1 mm bis 2 mm. Insbesondere bevorzugt ist eine Kombination der vorstehend genannten bevorzugten Dichten mit den bevorzugten Korngrößen, beispielsweise eine Dichte kleiner 1 kg/l und einer Korngröße im Bereich von 600 µm bis 3 mm oder vorzugsweise eine Dichte kleiner oder gleich 0,8 kg/l und einer Korngröße im Bereich von 1 mm bis 2 mm. Durch eine niedrige Dichte der Leichtkörnung kann die Dichte der Putzbeschichtungsmasse nochmals verringert werden. Es hat sich erwiesen, dass vorstehend genannten Leichtkörnungen, insbesondere die bevorzugten Leichtkörnungen, in Verbindung mit den Bindemitteln gute Hafteigenschaften der Putzbeschichtungsmassen liefern, wobei gleichzeitig die Dichte herabgesetzt wird. Geeignete Körnungsmaterialien, vom Fachmann vielfach auch nur mit Körnung bezeichnet, umfassen zum Beispiel Gesteinskörnung, Granit, Gneis, Sand, Kies, Splitt, Schotter oder auch künstliche, gekörnte Zuschläge, wie Kunststeingranulate oder Glas, Gesteinsmehl, z.B. Carbonat-Gesteinsmehl bzw. Marmormehl, gemahlenen Kalkstein, Dolomitmehl und/oder Feldspaltmehl, Gipsstein, Quarzit, Kieselgur, Pyrophyllit, Blähton, Vermiculite oder Perlite sowie beliebige Mischungen dieser Materialien. Für Leichtkörnungen wird bevorzugt auf expandierte Perlite zurückgegriffen. Leichtkörnungen können auch Blähglasgranulat, Bims und/oder Glashohlkugeln umfassen.

Das Wasserglas kann ausgewählt werden aus Lithium-, Kalium- und Natriumwasserglas oder einer beliebigen Mischung hiervon. Insbesondere Lithiumwasserglas ist besonders bevorzugt und ermöglicht eine höhere Wasserfestigkeit und damit auch Witterungsbeständigkeit. Auch wird hierdurch das sogenannte Ausblühen besonders wirksam zurückgedrängt bzw. unterbunden. Der solchermaßen eingefärbte erfindungsgemäße Putz zeigt zudem auch nach längerer Zeit keine sogenannte Schleierbildung.

Für weiße Putze oder pastellfarben abgetönte Putze sind als Pigmente Titandioxid oder Zinksulfid oder deren Mischung vorzugsweise einzusetzen. Die Pigmente sind nicht toxisch und weisen eine hinreichend hohe Deckkraft auf.

Das organische Bindemittel umfasst vorzugsweise mindestens ein dispergiertes oder dispergierbares Polymer, gebildet aus gleichartigen oder verschiedenen Monomeren, wobei mindestens eines der Monomere bzw. Comonomere aus einer Gruppe, bestehend aus Vinylacetat, Vinylclilorid, Vinylpropionat-, Ethylen, Acrylnitril, Methacrylsäureester und Acrylsäureester, ausgewählt ist. Bevorzugt sind polymere organische Bindemittel, die zumindest anteilig aus einem der Monomere Vinylacetat, Acrylsäureester, insbesondere Methyl-, Ethyl- und/oder Butylacrylat, oder (Meth)acrylsäureester, insbesondere Methyl-, Ethyl-, und/oder Butylmethacrylat, und/oder 2-Ethylhexylacrylat, gebildet werden, wobei Butylmethacrylat und 2-Ethylhexylacrylat ganz besonders bevorzugt sind. Das organische Bindemittel wird bevorzugt in Form einer wässrigen Dispersion eingesetzt, beispielsweise als etwa 50-gewichtsprozentige Dispersion.

Als besonders geeignet zur dauerhaften Fixierung der Kombination aus Füllstoffen, Leichtfüllstoffen und Kömungsmaterial haben sich organische Bindemittel enthaltend mindestens ein in Wasser dispergierbares Polymer, gebildet aus gleichartigen oder verschiedenen Monomeren, welche aus einer Gruppe bestehend aus Acrylsäureestern, Vinylacetat, Vinylchlorid, Vinylpropionat, Acrylnitril, Methacrylsäureester, Ethylen, Butadien, Styrol, Versatat und Maleinsäureester ausgewählt wurden, erwiesen.

Vorzugsweise ist das erfindungsgemäße Bindemittel hydrolysestabil bei einem pH-Wert von 10 oder darüber, insbesondere von 11 oder darüber. Hydrolysestabil im Sinne der vorliegenden Erfindung soll bedeuten, dass das Polymer nicht bzw. nur sehr langsam hydrolysiert. Langsam bedeutet in diesem Fall, dass der pH-Wert einer wässrigen Dispersion mit dem Polymer durch die Hydrolyse in einem Beobachtungszeitraum von einem Monat nicht wesentlich abgesenkt wird. Insbesondere bedeutet langsam, dass max. 5 % des Polymers nach einem Monat in einer 5 Gew.-%igen Dispersion bei 20°C und einem pH-Wert von 10 bzw. 11 hydrolysiert wird.

Besonders bevorzugte organische Bindemittel sind Methacrylat-Homopolymere, Methacrylat-Copolymere, Acrylat-Homopolymere Acrylat-Copolymere, Vinylacetat-Homopolymere, Vinylacetat-Copolymere, beispielsweise Vinylacetat-Acrylat-Copolymere, Vinylacetat-Ethylen-Copolymere, Vinylacetat-Versatat-Copolymere, Vinylacetat-Ethylen-Acrylat-Copolymere, Vinylacetat-Vinylchlorid-Ethylen-Copolymere, Vinylacetat-Vinylchlorid-Ethylen-Acrylat-Copolymere, Vinylacetat-Maleinsäureester-Copolymere, insbesondere Vinylacetat-Maleinsäuredi-*n*-butylester, Vinylacetat-Versatat-Copolymere, ferner Styrol-Acrylat-Copolymere und Acrylat-Methacrylat-Copolymere sowie Latex auf Basis von Butadien, Styrol und Acrylnitril. Dem Fachmann ist klar, dass noch weitere geeignete Kombinationen denkbar sind. Diesbezüglich haben insbesondere Butylacrylat/Methylmethacrylat-Copolymere und Styryot/Acrytat-Coplymere gute Bindeeigenschaften.

Vorzugsweise ist das organische Bindemittel vollständig aus einem der vorstehend beschriebenen Homopolymeren oder Copolymeren gebildet. Insbesondere bevorzugt wird das Bindemittel aus Mischungen von den beschriebenen Homopolymeren und Copolymeren gebildet.

Organische Bindemittel im Sinne der vorliegenden Erfindung umfassen ebenfalls sogenannte Organo-Silikat-Hybridbindemittel, beispielsweise Organo-Silikat/Acrylat-Hybridbindemittel. Hierbei können z**.**B. Silicapartikel, insbesondere nanoskalierte Silikapartikel eingebunden in einer (Meth)acrylatmatrix, insbesondere einer Reinacrylatmatrix, vorliegen.

In einer geeigneten Ausführungsform ist die mittlere Partikelgröße des Kieselsols kleiner oder gleich 80 nm, vorzugsweise kleiner oder gleich 40 nm und insbesondere bevorzugt kleiner oder gleich 20 nm. Mit sinkenden Partikelgrößen nimmt die aktive Oberfläche zu.

Bevorzugte Mengen für die Inhaltsstoffe der erfindungsgemäßen Putzbeschichtungsmasse werden nachfolgend wiedergegeben. Dabei wird unter Trockenmenge eines Stoffes die Menge des im Wesentlichen wasserfreien Stoffes in Gew.-% verstanden. Dies bedeutet nicht zwangsläufig, dass der Stoff im wasserfreien Zustand zugeführt werden muss. Vielmehr kann die Trockenmenge auch aufgrund eines bekannten Wassergehalts berechnet werden. Falls beispielsweise Leichtfüllstoffe und Kömungsmaterialien trocken, d.h. im Wesentlichen wasserfrei, sind, entspricht die Trockenmenge auch der tatsächlichen Menge. Wasserglas wird dagegen oftmals als wässrige Lösung verwendet (z.B. als Lösung mit 22 Gew.-% Feststoff), so dass hier nur der Feststoffanteil zu berücksichtigen wäre. Bei den meisten der genannten Inhaltsstoffe ist der Wasseranteil vernachlässigbar niedrig oder den Angaben des Herstellers zu entnehmen. Dem Fachmann sind im Zweifelsfall auch die üblichen Methoden zu Bestimmung der Zusammensetzung bekannt, so dass er nötigenfalls den Wasseranteil auch vor der Verwendung ermitteln kann.

Wasserglas liegt vorzugsweise in einer Trockenmenge im Bereich von 0,1 bis 5 Gew.-%, besonders bevorzugt im Bereich von 0,15 bis 4 Gew.-% und insbesondere bevorzugt im Bereich von 0,2 bis 3,5 Gew.-% bezogen auf das Gesamtgewicht der silikatischen Putzbeschichtungsmasse vor. Zu hohe Anteile an Wasserglas verringern in der Regel die Witterungsbeständigkeit. Zu niedrige Anteile erhöhen im Allgemeinen die Anfälligkeit des Putzes gegen Algenbewuchs.

Der Leichtfüllstoff liegt in einer bevorzugten Ausführungsform in einer Trockenmenge im Bereich von 0,2 bis 20 Gew.-%, besonders bevorzugt im Bereich von 0,5 bis 15 Gew.-% und bevorzugt im Bereich von 1 bis 10 Gew.-% bezogen auf das Gesamtgewicht der erfindungsgemäßen silikatischen Putzbeschichtungsmasse vor. Die genannten Bereiche senken die Dichte der Putzbeschichtungsmasse und damit auch den zu erwartenden Verbrauch, ohne die anderen Eigenschaften in unverhältnismäßiger Weise negativ zu beeinträchtigen. Setzt man zu wenig Leichtfüllstoff ein, kann es zu nachteiligen Veränderungen des erhaltenen Putzes, beispielsweise zu Riss- und/ oder Porenbildungen kommen. Wählt man die Menge an Leichtfüllstoff zu hoch, kann es zur Riss und Porenbildung kommen.

Der mindestens eine silikatische Füllstoff liegt vorzugsweise in einer Trockenmenge im Bereich von 0,1 bis 20 Gew.-%, bevorzugt im Bereich von 0,5 bis 17 Gew.-%, ebenfalls bevorzugt im Bereich von 0,5 bis 16 Gew.-%, besonders bevorzugt im Bereich von 3 bis 16 Gew.-% und insbesondere im Bereich von 5 bis 15 Gew.-% bezogen auf das Gesamtgewicht der erfindungsgemäßen silikatischen Putzbeschichtungsmasse vor.

Der mindestens eine calcitische Füllstoff liegt, falls überhaupt anwesend, vorzugsweise in einer Trockenmenge im Bereich von 0,1 bis 35 Gew.-%, bevorzugt im Bereich von 0,1 bis 6 Gew.-%, bezogen auf das Gesamtgewicht der erfindungsgemäßen silikatischen Putzbeschichtungsmasse vor. Hierbei enthält die erfindungsgemäße Putzbeschichtungsmasse vorzugsweise keine calcitischen Füllstoffe.

Das Körnungsmaterial liegt vorzugsweise in einer Trockenmenge im Bereich von 15 bis 70 Gew.-%, besonders bevorzugt im Bereich von 18 bis 60 Gew.-% und insbesondere bevorzugt im Bereich von 20 bis 55 Gew.-% bezogen auf das Gesamtgewicht der erfindungsgemäßen silikatischen Putzbeschichtungsmasse vor.

Das organische Bindemittel, insbesondere die Acrylat- oder (Meth)acrylat-Homopolymere und/oder (Meth)acrylat-Copolymere, liegt vorzugsweise in einer Trockenmenge im Bereich von 1 bis 8 Gew.-%, besonders bevorzugt im Bereich von 1,5 bis 6 Gew.-% und insbesondere bevorzugt im Bereich von 2 bis 5 Gew.-% bezogen auf das Gesamtgewicht der erfindungsgemäßen silikatischen Putzbeschichtungsmasse vor. Die genannten Anteile an Binde-mittel sorgen insbesondere in der vorliegenden Kombination von Inhaltsstoffen für eine gute Bindewirkung.

Kieselsol liegt vorzugsweise in einer Trockenmenge im Bereich von 0,2 bis 5 Gew.-%, besonders bevorzugt im Bereich von 0,4 bis 4 Gew.-% und insbesondere bevorzugt im Bereich von 0,6 bis 2 Gew.-% bezogen auf das Gesamtgewicht der erfindungsgemäßen silikatischen Putzbeschichtungsmasse vor. Das Kieselsol ist vorzugsweise alkalisch und hat insbesondere vorzugsweise einen pH-Wert größer 9.

Wasser liegt vorzugsweise in einer Menge im Bereich von 10 bis 60 Gew.-%, besonders bevorzugt im Bereich von 15 bis 45 Gew.-% und insbesondere bevorzugt im Bereich von 20 bis 37 Gew.-% bezogen auf das Gesamtgewicht der erfindungsgemäßen silikatischen Putzbeschichtungsmasse vor. Wasser wird dabei regelmäßig in Mengen zugegeben, dass die Summe der Gewichtsanteile der einzelnen Komponenten 100 Gew.-% ergibt.

In einer weiteren bevorzugten Ausführungsform einer erfindungsgemäßen Putzbeschichtungsmasse kann ferner vorgesehen sein, dass in dieser, bezogen auf das Gesamtgewicht der silikatischen Putzbeschichtungsmasse die Trockenmenge an
- Wasserglas im Bereich von 0,2 bis 3,5 Gew.-%, bevorzugt im Bereich von 0,5 bis 1,5 Gew.-%, liegt und/oder
- Leichtfüllstoff im Bereich von 1 bis 10 Gew.-%, bevorzugt im Bereich von 2 bis 7 Gew.-%, liegt und/oder
- silikatischen Füllstoff im Bereich von 8 bis 20 Gew.-%, bevorzugt im Bereich von 10 bis 17 Gew.-%, liegt und/oder
- Körnungsmaterial im Bereich von 30 bis 60 Gew.-%, bevorzugt im Bereich von 40 bis 55 Gew.-%, liegt und/oder
- organische Bindemittel im Bereich von 2 bis 10 Gew.-%, bevorzugt im Bereich von 3 bis 7 Gew.-% liegt und/oder
- Kieselsol im Bereich von 0,4 bis 3 Gew.-%, bevorzugt im Bereich von 0,6 bis 2 Gew.-% liegt, wobei diese Putzbeschichtungsmasse vorzugsweise keine calcitischen Füllstoffe enthält. Wasser wird dabei regelmäßig in Mengen zugegeben, dass die Summe der Gewichtsanteile der einzelnen Komponenten 100 Gew.-% ergibt.

Ferner betrifft die Erfindung einen Leichtputz, der eine erfindungsgemäße Putzbeschichtungsmasse umfasst oder vorzugsweise aus dieser gebildet ist. Vorzugsweise weist der Leichtputz eine Schichtdicke von 0,5 bis 4 mm und insbesondere bevorzugt von 1 bis 3 mm, beispielsweise von 1 bis 2 mm, auf. Der erfindungsgemäße Leichtputz kann als Außen-, aber auch als Innenputz verwendet werden. Vorzugsweise handelt es sich um einen Außenleichtputz. Insbesondere Leichtputze mit einer Dichte kleiner oder gleich 1,75 g/cm³, vorzugsweise kleiner oder gleich 1,6 g/cm³ und besonders bevorzugt kleiner oder gleich 1,5 g/cm³, beispielsweise im Bereich von 1,24 bis 1,45 g/cm³, lassen sich mit der erfindungsgemäßen Putzbeschichtungsmasse gewinnen. Hierdurch wird der Verbrauch signifikant vermindert.

Vorzugsweise ist die die Pigment-Volumen-Konzentration (PVK) der erfindungsgemäßen Leichtputze größer oder gleich 80 %, insbesondere größer oder gleich 82 % und besonders bevorzugt größer oder gleich 84 %. Ebenfalls bevorzugt sind Ausführungsformen, bei welchen die Pigment-Volumen-Konzentration (PVK) des Leichtputzes kleiner 95 %, vorzugskleiner 92% ist. Besonders geeignete PVK-Werte liegen im Zusammenhang mit der Erfindung im Bereich von 82 % bis 91 %, beispielsweise im Bereich von etwa 84 % bis etwa 90 %. Die Pigment-Volumen-Konzentration gibt das Volumenverhältnis zwischen Pigmenten/Füllstoffen und dem Bindemittel wieder. Bei Einhaltung hier wiedergegebener PVK-Werte benetzen die Bindemittel die Pigmente, Füllstoffe und Leichtfüllstoffe optimal, so dass die Konsistenz und Haftung den jeweiligen Anforderungen entspricht.

Mit den erfindungsgemäßen Putzbeschichtungsmasse gelangt man überraschenderweise zu Leichtputzen, die über einen sehr hohen Anteil an Füllstoffen, insbesondere silikatischen Füllstoffen, einschließlich Leichtfüllstoffen, und Körnungsmaterial verfügen können, wobei dieses sogar bei gleichzeitig relativ geringem Anteil an Bindemitteln gelingt. Ohne an eine bestimmte Theorie gebunden zu sein, wird vermutet, dass dieses Ergebnis auf den Einsatz einer Kombination an Bindemitteln umfassend organische Bindemittel, Wasserglas und Kieselsol oder auf den genannten Bindemittelmix kombiniert mit dem Einsatz von Leichtfüllstoffen und/oder silikatischen Füllstoffen zurückzuführen ist.

Auch betrifft die Erfindung die Verwendung der erfindungsgemäßen Putzbeschichtungsmassen für die Herstellung von Leichtputzen, insbesondere der vorstehend genannten Leichtputze. Hierbei hat es sich als besonders vorteilhaft erwiesen, wenn die erfindungsgemäße Beschichtungsmasse vor Applikation auf dem Untergrund aufgerührt wird. Dies bewirkt einen weiteren Lufteintrag in die Beschichtungsmasse, was die Dichte erneut absenkt und somit die Verarbeitung verbessert. Des Weiteren wird über den Lufteintrag die Ergiebigkeit der Beschichtungsmasse erhöht. Ferner betrifft die Erfindung die Verwendung von Bindemitteln für die Herstellung der Putzbeschichtungsmassen und Leichtputze, insbesondere Bindemitteln für die Herstellung der erfindungsgemäßen Putzbeschichtungsmassen und der daraus erhältlichen erfindungsgemäßen Leichtputze, wobei die Bindemittel Kieselsol, mindestens ein organisches Bindemittel und mindestens ein Wasserglas enthalten. Bevorzugt sind Bindemittelmischungen, bei welchen der Anteil an organischem Bindemittel größer ist als der Anteil an Wasserglas und Kieselsol, vorzugsweise mindestens doppelt so groß (jeweils bezogen auf die Trockenmenge in Gew.-%). Kieselsol wird in einer wässrigen kolloidalen. Suspension oder als silikatische Komponente eines Organo-Sitikat-Hybridbindemittels eingesetzt.

Die Erfindung betrifft insbesondere auch die Verwendung bzw. das Aufbringen der erfindungsgemäßen Putzbeschichtungsmasse auf einem Wärmedämmaterial, insbesondere einem WDVS-Untergrund, wobei das Wärmedämmmaterial vorzugsweise geschäumte Dämmplatten und/oder organische oder anorganische Fasern umfasst. Bei den besagten Wärmedämmmaterialien ist ein Entweichen der Feuchtigkeit von großer Bedeutung. Daher wirkt sich die hohe Wasserdampfdurchlässigkeit der erfindungsgemäßen Putzbeschichtungsmasse besonders positiv aus.

Erfindunggsgemäße Putzbeschichtungsmassen zeichnen sich durch eine sehr hohe Ergiebigkeit aus. So weist z.B. eine Putzbeschichtungsmasse mit 2 mm Strukturkorn gemäß dem nachfolgend genannten Beispiel 1 (siehe Tabelle) beim Aufbringen auf einen WDVS-Untergrund einen um etwa 1 kg/m² verringerten Verbrauch gegenüber herkömmlichen Putzbeschichtungsmassen mit einer Dichte von 1,9 g/cm³ auf. Bezogen auf eine vorgegebene Fläche kann der Verbrauch an Putzbeschichtungsmasse gegenüber vergleichbaren Beschichtungsmassen aus dem Stand der Technik signifikant reduziert werden, ohne zugleich irgendwelche Qualitätseinbußen in Kauf nehmen zu müssen. Bei gleichen Haftungseigenschaften verringert sich mit abnehmender Dichte der Putzbeschichtungsmasse deren Tendenz vom Untergrund abzurutschen, wobei Materialverluste vermieden werden und der Arbeitsbereich sauberer bleibt. Im Fall eines Deckenputzes erhöht sich auch die Sicherheit, da ein leichterer Putz (bei gleicher Haftung), eine geringere Wahrscheinlichkeit hat sich abzulösen. Auch einem Fachmann, der den Putz unter erschwerten Arbeitsbedingungen auf vertikalen oder sogar kopfüber an horizontalen Flächen aufbringen muss, erleichtert das verminderte Gewicht die Arbeit erheblich. Die erfindungsgemäßen Putzbeschichtungsmassen sind mit hoher Anfangsalkalität erhältlich, die auch in den daraus erhaltenen Beschichtungen über einen längeren Zeitraum beibehalten wird. Die erfindungsgemäßen Beschichtungsmassen können demgemäß ohne herkömmliche Konservierungsmittel verwendet werden. Die mit den erfindungsgemäßen Beschichtungsmassen erhaltenen Putze zeichnen sich zudem durch einen wirkungsvollen Feuchtigkeitshaushalt aus. Sie sind wasserdampfdurchlässig, weisen aber zum Beispiel eine niedrige Wasseraufnahme auf. Die erfindungsgemäPutzbeschichtungsmassen zeichnen sich zudem durch eine gute bzw. verbesserte Einfärbbarkeit aus; es kann eine sehr breite Vielfalt an Farben eingestellt werden. Auch sind die erhaltenen erfindungsgemäßen Putze überaus farbtonstabil. Von Vorteil ist auch, dass die erfindungsgemäßen Putzbeschichtungsmassen nicht brennbar sind und bei relativ niedrigen Temperaturen, z.B. kleiner 7°C, und bei hoher Luftfeuchtigkeit komplikationsfrei verarbeitet werden können. Die mit den erfindungsgemäßen Putzbeschichtungsmassen erhältlichen Leichtputze gewährleisten demgemäß einen sehr guten Brandschutz. Mit erfindungsgemäßen Leichtputzen gelingt selbst eine Zuordnung zur Brandklasse A2 D1 S0, d.h. der gemäß EN ISO 1716 ermittelte Heizwert (PCS) liegt unterhalb von 3,0 MJ/kg, beispielsweise bei etwa 2,5 MJ/kg.

Nachfolgend sind beispielhaft einige geeignete Zusammensetzungen für erfindungsgemäße Putzbeschichtungsmassen wiedergegeben. Das organische Bindemittel der nachfolgenden

Beispiele umfasst Butylacrylat/Methylmethacrylat-Copolymere und Styryol/Acrylat-Coplymere. Als Verdicker kamen Celluloseether und Bentonite zum Einsatz, als Stabilisatoren quartäre Ammoniumverbindungen. Das organische Bindemittel wurde in Form einer etwa 50-%igen wässrigen Dispersion eines Acrylatcopolymeren eingesetzt. Bei den silikatischen Füllstoffen wurde auf Feldspate, bei den calcitischen Füllstoffen auf Calciumcarbonate zurückgegriffen. Als Leichtfüllstoff kamen expandierte Perlite zum Einsatz. Das Wasserglas lag in einem wässrigen System (0,22 Gew.-%) enthaltend Lithiumwasserglas vor. Als Fasern wurde Cellulose- und Glasfasern in Form von Stapel- bzw. Schnittfasern eingesetzt. Für das Hydrophobierungsmittel wurde auf handelsübliche Wachse und Silikone zurückgegriffen. Der pH-Wert der Putzbeschichtungsmassen lag bei 11. Das Gewicht der Rezepturkomponenten der Beispiele 1 bis 8 bezieht sich (abgesehen von der Komponente "Wasser") jeweils auf die Trockenmasse dieser Komponente. D.h. sämtliche Wasseranteile, die bei den gebrauchsfertigen Komponenten regelmäßig zugegen sind, sind der Komponente "Wasser" zugewiesen worden.

**Tabelle 1: Zusammensetzung der Putzbeschichtungsmassen gemäß den Beispielen 1 bis 4**

| Inhaltsstoff | Beispiel 1 | Beispiel 2 | Beispiel 3 | Beispiel 4 |
|---|---|---|---|---|
| Wasser | 21,8 kg | 20,6 kg | 21,6 kg | 21,6 kg |
| Additive, enth. Stabilisator und Verdicker | 1,5 kg | 1,5 kg | 1,5 kg | 1,5 kg |
| Titandioxid | 4,2 kg | 4,2 kg | 4,2 kg | 4,2 kg |
| Bindemittel organisch | 4,1 kg | 4,1 kg | 4,1 kg | 4,1 kg |
| Kieselsol | 0,9 kg | 0,9 kg | 0,9 kg | 0,9 kg |
| silikatischer Füllstoff D₅₀ 35 µm | 8,0 kg | 13,5 kg | 9,2 kg | 7,2 kg |
| silikatischer Füllstoff D₅₀ 26 µm | 3,0 kg | 3,0 kg | 3,0 kg | 3,0 kg |
| silikatischer Füllstoff D₅₀ 160 µm | 0,5 kg | 0,5 kg | 0,5 kg | 0,5 kg |
| calcitischer Füllstoff D₅₀ 35 µm | 0,0 kg | 0,0 kg | 0,0 kg | 0,0 kg |
| calcitischer Füllstoff D₅₀ 26 µm | 0,0 kg | 0,0 kg | 0,0 kg | 0,0 kg |
| Leichtfüllstoff | 4,5 kg | 0,0 kg | 4,5 kg | 4,5 kg |
| Fasern | 0,8 kg | 0,8 kg | 0,8 kg | 0,8 kg |
| Wasserglas | 0,9 kg | 0,9 kg | 0,9 kg | 0,9 kg |
| Hydrophobierungsmittel | 1,8 kg | 2,0 kg | 0,8 kg | 2,8 kg |
| Körnung 0,35-0,7 mm | 5,0 kg | 5,0 kg | 5,0 kg | 5,0 kg |
| Körnung 1,0-1,5 mm | 18,0 kg | 18,0 kg | 18,0 kg | 18,0 kg |
| Körnung 1,5-2,0 mm | 25,0 kg | 25,0 kg | 25,0 kg | 25,0 kg |
| Leichtkörnung 1,0-2,0 mm | 0,0 kg | 0,0 kg | 0,0 kg | 0,0 kg |

Beispiel 1 beschreibt eine bevorzugte erfindungsgemäße Putzbeschichtungsmasse. Die Pigment-Volumen-Konzentration liegt bei 86 %. Die Dichte der Putzbeschichtungsmasse ist ca. 1,4 g/cm³.

Beispiel 2 betrifft eine Putzbeschichtungsmasse, die ohne Leichtfüllstoff formuliert wurde. Es handelt sich um ein Vergleichsbeispiel. Durch den Verzicht auf den Leichtfüllstoff liegt die Dichte der Putzbeschichtungsmasse bei ca. 1,9 g/cm³. Die Pigment-Volumen-Konzentration liegt bei 77%.

Beispiel 3 betrifft eine Putzbeschichtungsmasse, die wenig Hydrophobierungsmittel enthält. Die Dichte der Putzbeschichtungsmasse liegt bei ca. 1,4 g/cm³. Die Pigment-Volumen-Konzentration liegt bei 88%. Obwohl das Hydrophobierungsmittel herabgesetzt wurde, sind die Eigenschaften der Putzbeschichtungsmasse zufriedenstellend.

In Beispiel 4 wurde besonders viel Hydrophobierungsmittel eingesetzt. Es hat sich gezeigt, dass dies die Witterungsbeständigkeit erhöhen kann. Die Pigment-Volumen-Konzentration liegt bei 84%, wobei die Dichte ca. 1,4 g/cm³ beträgt.

**Tabelle 2: Zusammensetzung der Putzbeschichtungsmassen gemäß den Beispielen 5 bis 8**

| Inhaltsstoff | Beispiel 5 | Beispiel 6 | Beispiel 7 | Beispiel 8 |
|---|---|---|---|---|
| Wasser | 21,8 | 21,5 | 21,2 | 30,3 |
| Additive, enth. Stabilisator und Verdicker | 1,5 | 1,5 | 1,5 | 1,5 |
| Titandioxid | 4,2 | 4,2 | 4,2 | 4,2 |
| Bindemittel, organisch | 4,1 | 5,1 | 3,0 | 4,1 |
| Kieselsol | 0,9 | 0,9 | 0,9 | 0,9 |
| silikatischer Füllstoff D₅₀ 35 µm | 0,0 | 8,0 | 8,0 | 0,0 |
| silikatischer Füllstoff D₅₀ 26 µm | 0,0 | 3,0 | 3,0 | 3,0 |
| silikatischer Füllstoff D₅₀ 160 µm | 0,5 | 0,5 | 0,5 | 0,0 |
| calcitischer Füllstoff D₅₀ 35 µm | 8,0 | 0,0 | 0,0 | 15,0 |
| calcitischer Füllstoff D₅₀ 26 µm | 3,0 | 0,0 | 0,0 | 15,0 |
| Leichtfüllstoff | 4,5 | 4,5 | 4,5 | 2,5 |
| Fasern | 0,8 | 0,8 | 0,8 | 0,8 |
| Wasserglas | 0,9 | 0,2 | 2,6 | 0,9 |
| Hydrophobierungsmittel | 1,8 | 1,8 | 1,8 | 1,8 |
| Körnung 0,35-0,7 mm | 5,0 | 5,0 | 5,0 | 0,0 |
| Körnung 1,0-1,5 mm | 18,0 | 18,0 | 18,0 | 0,0 |
| Körnung 1,5-2,0 mm | 25,0 | 25,0 | 25,0 | 0,0 |
| Leichtkörnung 1,0-2,0 mm | 0,0 | 0,0 | 0,0 | 20,0 |

In Beispiel 5 wurden die silikatischen Füllstoffe fast vollständig durch calzitische Füllstoffe ersetzt. Es hat sich gezeigt, dass sich mit silicatischem Füllstoff bessere Ergebnisse bezüglich der Farbstärke, Farbtonbrillanz und Farbtonstabilität sowie der Witterungsbeständigkeit erzielen lassen. Die Pigment-Volumen-Konzentration liegt bei 86%, wobei die Dichte ca. 1,4 g/cm³ beträgt.

In Beispiel 6 wurde nur wenig Wasserglas eingesetzt. Gleichwohl ist die Menge hinreichend, um eine gute Bindewirkung und einen hohen pH-Wert der Putzbeschichtungsmasse zu gewährleisten. Die Pigment-Volumen-Konzentration liegt bei 85%, wobei die Dichte ca. 1,4 g/cm³ beträgt.

In Beispiel 7 wurde besonders viel Wasserglas eingesetzt. Die Pigment-Volumen-Konzentration liegt bei 86%, wobei die Dichte ca. 1,4 g/cm³ beträgt.

In Beispiel 8 wurde die spezifisch schwerere Körnung aus den Vorbeispielen durch Leichtkörnung ersetzt. Die Pigment-Volumen-Konzentration liegt bei 89%, wobei die Dichte ca. 1,1 g/cm³ beträgt.

Für einen Putz mit einer Kratzputzstruktur von 2 mm wurde bei Verwendung der erfindungsgemäßen Beispielrezepturen ein Flächenverbrauch im Bereich von 1,8 kg/m² bis 2,3 kg/m² an Putzbeschichtungsmasse beobachtet. Für aus dem Stand der Technik bekannte gebrauchsfähig formulierte Standardputze mit einer Kratzputzstruktur von 2 mm werden üblicherweise 3,2 kg/m² bis 3,4 kg/m² Putzbeschichtungsmasse benötigt. Ferner wurde für einen Putz mit einer Kratzputzstruktur von 1 mm bei Verwendung der erfindungsgemäßen Beispielrezepturen ein Flächenverbrauch im Bereich von 1,2 kg/m² bis 1,5 kg/m² an Putzbeschichtungsmasse bestimmt. Bei einer Kratzputzstruktur von 3 mm lag der Flächenverbrauch im Bereich von 2,6 kg/m² bis 2,9 kg/m² und bei einer Kratzputzstruktur von 4 mm bei einem Flächenverbrauch im Bereich von 3,3 bis 3,9 kg/m² an erfindungsgemäßer Putzbeschichtungsmasse.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Silikatische Putzbeschichtungsmasse, umfassend
a) mindestens einen silikatischen Füllstoff und/oder mindestens einen calcitischen Füllstoff, vorzugsweise mindestens einen silikatischen Füllstoff und keinen calcitischen Füllstoff,
b) mindestens einen Leichtfüllstoff,
c) Kieselsol,
d) mindestens ein Wasserglas,
e) Körnungsmaterial,
f) mindestens ein organisches Bindemittel,
g) Additive und
h) Wasser,
wobei die Putzbeschichtungsmasse über einen pH-Wert von mindestens 9,5, insbesonmindestens 10,5 verfügt.

2. Putzbeschichtungsmasse nach Anspruch 1, ferner umfassend
i) mindestens ein Hydrophobierungsmittel,
j) Fasern, insbesondere Glas- und/oder Cellulosefasern, und/oder
k) mindestens einen Farbstoff und/oder mindestens ein Pigment.

3. Putzbeschichtungsmasse nach Anspruch 1 oder 2, **dadurch gekennzeichnet, dass** der silikatische und/oder der calcitische Füllstoff über eine Dichte größer oder gleich 2,0 kg/l verfügen.

4. Putzbeschichtungsmasse nach einem der vorangehenden Ansprüche, **dadurch gekennzeichnet, dass** der Leichtfüllstoff über eine Dichte kleiner oder gleich 1,0 kg/l verfügt.

5. Putzbeschichtungsmasse nach einem der vorangehenden Ansprüche, **dadurch gekennzeichnet, dass** der mindestens eine silikatische Füllstoff und/oder Leichtfüllstoff über eine durchschnittliche Partikelgröße D₅₀ von nicht mehr als 250 µm, insbesondere im Bereich von 20 µm bis 200 µm, verfügt und/oder dass der mindestens eine calcitische Füllstoff über eine durchschnittliche Partikelgröße D₅₀ im Bereich von 10 bis 100 µm, insbesondere im Bereich von 20 µm bis 50 µm verfügt,

6. Putzbeschichtungsmasse nach einem der vorangehenden Ansprüche, **dadurch gekennzeichnet, dass** die Additive Verdicker, Stabilisatoren, Netz- und Dispergiermittel, Filmbildner, Entschäumer oder deren beliebige Mischungen umfassen.

7. Putzbeschichtungsmasse nach einem der vorangehenden Ansprüche, **dadurch gekennzeichnet, dass** die Korngröße des Körnungsmaterials mindestens 300 µm, insbesondere im Bereich von 320 µm bis 5 mm und besonders bevorzugt im Bereich von 350 µm bis 4 mm beträgt (Siebanalyse gemäß DIN 66165), und/oder dass die Dichte des Körnungsmaterials kleiner 1 kg/l, vorzugsweise kleiner oder gleich 0,8 kg/l und insbesondere bevorzugt kleiner oder gleich 0,7 kg/l, ist.

8. Putzbeschichtungsmasse nach einem der vorangehenden Ansprüche, **dadurch gekennzeichnet, dass** das Wasserglas ausgewählt ist aus Lithium-, Kalium- und Natriumwasserglas oder einer beliebigen Mischung hiervon, insbesondere Lithiumwasserglas,

9. Putzbeschichtungsmasse nach einem der Ansprüche 2 bis 8, **dadurch gekennzeichnet, dass** die Pigmente Titandioxid oder Zinksulfid oder deren Mischung umfassen.

10. Putzbeschichtungsmasse nach einem der vorangehenden Ansprüche, **dadurch gekennzeichnet, dass** das organische Bindemittel mindestens ein in Wasser dispergiertes oder dispergierbares Polymer, gebildet aus gleichartigen oder verschiedenen Monomeren, umfasst, wobei mindestens eines der Monomere ein Acrylsäureester, Vinylacetat, Vinylchlorid, Vinylpropionat, Versatat, Acrylnitril oder Methacrylsäureester ist und wobei das Polymer vorzugsweise hydrolysestabil bei einem pH-Wert von 10 oder darüber, vorzugsweise bei einem pH-Wert von 11 oder darüber ist, und/oder wobei das organische Bindemittel mindestens ein Organo-Silikat-Hybridbindemittel, insbesondere ein Organo-Silikat/Acrylat-Hybridbindemittel, umfasst.

11. Putzbeschichtungsmasse nach einem der vorangehenden Ansprüche, **dadurch gekennzeichnet, dass** das organische Bindemittel mindestens ein in Wasser dispergiertes oder dispergierbares Polymer, gebildet aus gleichartigen oder verschiedenen Monomeren, umfasst, wobei die Monomere aus einer Gruppe bestehend aus Acrylsäureestern, Vinylacetat, Vinylpropionat, Vinylchlorid, Acrylnitril, Methacrylsäureestern, Ethylen, Butadien, Styrol, Versatat und Maleinsäureester ausgewählt wurden.

12. Putzbeschichtungsmasse nach einem der vorangehenden Ansprüche, **dadurch gekennzeichnet, dass** die Leichtfüllstoffe ausgewählt sind aus der Gruppe bestehend aus Bims, expandiertem Perlit, Blähglas, Hohlglaskugeln, Calciumsilikat-Hydraten und Partikeln aus expandiertem Polystyrol (EPS) oder deren beliebigen Mischungen.

13. Putzbeschichtungsmasse nach einem der vorangehenden Ansprüche, **dadurch gekennzeichnet, dass** bezogen auf das Gesamtgewicht der silikatischen Putzbeschichtungsmasse die Trockenmenge von
• Wasserglas im Bereich von 0,1 bis 5 Gew.-%, bevorzugt im Bereich von 0,15 bis 4 Gew.-% und besonders bevorzugt im Bereich von 0,2 bis 3,5 Gew.-% liegt und/oder
• Leichtfüllstoff im Bereich von 0,2 bis 20 Gew.-%, bevorzugt im Bereich von 0,5 bis 15 Gew.-% und besonders bevorzugt im Bereich von 1 bis 10 Gew.-% liegt und/oder
• silikatischen Füllstoff im Bereich von 0,1 bis 20 Gew.-%, bevorzugt im Bereich von 0,5 bis 17 Gew.-% und besonders bevorzugt im Bereich von 0,5 bis 16 Gew.-% liegt und/oder
• Körnungsmaterial im Bereich von 15 bis 70 Gew.-%, bevorzugt im Bereich von 18 bis 60 Gew.-% und besonders bevorzugt im Bereich von 20 bis 55 Gew.-% liegt und/oder
• organische Bindemittel im Bereich von 1 bis 10 Gew.-%, bevorzugt im Bereich von 1,5 bis 8 Gew.-% und besonders bevorzugt im Bereich von 2 bis 7 Gew.-% liegt und/oder
• Kieselsol im Bereich von 0,2 bis 5 Gew.-%, bevorzugt im Bereich von 0,4 bis 4 Gew.-% und besonders bevorzugt im Bereich von 0,6 bis 2 Gew.-% liegt und/oder
• calcitischem Füllstoff im Bereich von 0,1 bis 35 Gew.-%, bevorzugt im Bereich von 0,1 bis 6 Gew.-% liegt,
wobei die Putzbeschichtungsmasse vorzugsweise keine calcitischen Füllstoffe enthält.

14. Putzbeschichtungsmasse nach einem der Ansprüche 1 bis 12, **dadurch gekennzeichnet, dass** bezogen auf das Gesamtgewicht der silikatischen Putzbeschichtungsmasse die Trockenmenge von
• Wasserglas im Bereich von 0,2 bis 3,5 Gew.-%, bevorzugt, im Bereich von 0,5 bis 1,5 Gew.-%, liegt und/oder
• Leichtfüllstoff im Bereich von 1 bis 10 Gew.-%, bevorzugt im Bereich von 2 bis 7 Gew.-%, liegt und/oder
• silikatischem Füllstoff im Bereich von 8 bis 20 Gew.-%, bevorzugt im Bereich von 10 bis 17 Gew.-%, liegt und/oder
• Körnungsmaterial im Bereich von 30 bis 60 Gew.-%, bevorzugt im Bereich von 40 bis 55 Gew.-%, liegt und/oder
• organische Bindemittel im Bereich von 2 bis 10 Gew.-%, bevorzugt im Bereich von 3 bis 7 Gew.-% liegt und/oder
• Kieselsol im Bereich von 0,4 bis 3 Gew.-%, bevorzugt im Bereich von 0,6 bis 2 Gew.-% liegt und/oder
• calcitischem Füllstoff im Bereich von 0,1 bis 35 Gew.-%, bevorzugt im Bereich von 0,1 bis 6 Gew.-% liegt,
wobei diese Putzbeschichtungsmasse vorzugsweise keine calcitischen Füllstoffe enthält.

15. Putzbeschichtungsmasse nach einem der vorangehenden Ansprüche, **dadurch gekennzeichnet, dass** darin das Wasser in einer Menge im Bereich von 10 bis 60 Gew.-%, bevorzugt im Bereich von 15 bis 45 Gew.-% und besonders bevorzugt im Bereich von 20 bis 37 Gew.-% bezogen auf das Gesamtgewicht der silikatischem Putzbeschichtungsmasse vorliegt.

16. Putzbeschichtungsmasse nach einem der vorangehenden Ansprüche, **dadurch gekennzeichnet, dass** der Gewichtsanteil an silikatischem Füllstoff größer ist als der Gewichtsanteil an calcitischem Füllstoff oder dass die Beschichtungsmasse silikatischem Füllstoff und keinen calcitischen Füllstoff aufweist.

17. Leichtputz, umfassend oder gebildet aus einer silikatischem Putzbeschichtungsmasse nach einem der vorangehenden Ansprüche, insbesondere Leichtputz mit einer Dichte kleiner oder gleich 1,75 g/cm³, vorzugsweise kleiner oder gleich 1,6 g/cm³ und besonders bevorzugt kleiner oder gleich 1,5 g/cm³.

18. Leichtputz nach Anspruch 17, **dadurch gekennzeichnet, dass** die Pigment-Volumen-Konzentration (PVK) größer oder gleich 80 %, insbesondere größer oder gleich 82 % und besonders bevorzugt größer oder gleich 84 % ist.

19. Verwendung der Putzbeschichtungsmasse nach einem der Ansprüche 1 bis 16 für die Herstellung von Leichtputzen, insbesondere nach Anspruch 17 oder 18.

20. Verwendung von Bindemitteln für die Herstellung von Putzbeschichtungsmassen, insbesondere nach einem der Ansprüche 1 bis 16, oder einem Leichtputz, insbesondere nach Anspruch 17 oder 18, **dadurch gekennzeichnet, dass** die Bindemittel Kieselsol, mindestens ein organisches Bindemittel und mindestens ein Wasserglas umfassen.

21. Verwendung nach Anspruch 19 oder 20, **dadurch gekennzeichnet, dass** die Putzbeschichtungsmasse auf einer Innenwand oder einer Fassade, vorzugsweise einem Wärmedämmmaterial, insbesondere einem WDVS-Untergrund, aufgebracht wird, wobei das Wärmedämmmaterial vorzugsweise geschäumte Dämmplatten und/oder organische oder anorganische Fasern umfasst.
